# FASCICULE DE BREVET EUROPEEN

(11) **EP 2 075 726 B1**
(45) Date de publication et mention de la délivrance du brevet: **28.07.2010**
(21) Numéro de dépôt: 08291222.1
(22) Date de dépôt: 19.12.2008
(51) Int. Cl.: G06F 21/00, H04L 9/32, G06K 17/00, G06K 9/20

(54) **Outil utilisable pour l'authentification de documents, procédés d'utilisation de l'outil et de documents produits par le ou les procédés**
Werkzeug zur Authentifizierung von Dokumenten, Anwendungsverfahren dieses Werkzeugs und der Dokumente, die mit diesem/diesen Verfahren erzeugt wurden
Tool that can be used to authenticate documents, methods of using the tool and documents produced by the method or methods

(30) Priorité: 31.12.2007 FR 0709184
(43) Date de publication de la demande: 01.07.2009
(73) Titulaire: SOCIETE FRANCAISE DU RADIO TELEPHONE (SFR), 75008 Paris (FR)
(72) Inventeur: Bouvier, Christian, 91470 Limours (FR); Despagne, Guillaume, 92150 Suresnes (FR); Norlain, Marc, 35000 Rennes (FR); Wary, Jean-Philippe, 92340 Bourg la Reine (FR)
(74) Mandataire: Debay, Yves

(56) Documents cités:
- EP-A- 1 102 205
- WO-A-00/48123
- WO-A-2006/122433
- JP-A- 2001 297 162
- US-A1- 2006 065 714
- US-A1- 2007 260 886
- US-B1- 6 389 151

## Description

L'invention a pour objet un dispositif utilisable pour l'authentification, les procédés d'utilisation du dispositif et les documents produits par ces dispositifs. L'invention concerne particulièrement le domaine des prestataires de service et les relations avec les clients et en particulier les moyens d'authentifier un client ou les informations fournies par un client.

Au titre de l'art antérieur, différents documents peuvent être cités. Le document EP 1 102 205 A concerne un système qui génère une identité signée (à partir d'informations saisies) et les stocke dans un format code barre 2D. Ce code barre 2D est ensuite lu et permet de vérifier que ce code barre est authentique et donc l'identité conforme à ce qui avait été présenté. Le document WO 00/48123 A concerne un système qui lit une empreinte digitale et la compare à celle stockée et lue sur un code barre 2D. Ce système permet de s'assurer de l'authenticité du code barre lu et donc des informations contenues dans celui-ci.

Il est également connu un lecteur de passeport pour obtenir un passeport comportant un élément RFID associés. Ce type de dispositif est enseigné par la demande de brevet US 2006/065714. Un exemple de réalisation de l'invention propose un lecteur de passeport pour obtenir un passeport comportant un élément RFID associé, y compris un lecteur RFID pour interroger et obtenir des informations de l'élément RFID associé au passeport et une antenne pour transmettre les signaux entre un élément RFID et le lecteur RFID

La demande internationale WO 2006/122433 décrit un protocole d'authentification de passeport pour le cryptage de données sensibles telles que les données biométriques et le transfert de la clef de cryptage à partir du passeport à l'autorité d'authentification pour permettre la comparaison avec une valeur de référence.

Le document US 2007/0260886 décrit un dispositif d'authentification biométrique et son procédé associé pour fournir des informations d'authentification associées à une personne.

Le document US 6 389 151 révèle des documents de sécurité qui présentent des champs ou des zones multiples, chacun contenant une information perceptible de plus d'une façon. Un champ peut contenir une image visuellement perceptible et un filigrane numérique qui peut être détecté lors d'une analyse et d'un traitement de l'image, un autre champ peut contenir du texte lisible par une machine à reconnaissance de caractère optique, qui peut être lu à la fois par un humain et par un ordinateur programmé, et un autre champ peut encore contenir des données en filigrane qui peuvent être corrélées à la sortie d'un lecteur d'empreinte ou d'un appareil qui analyse l'iris d'un utilisateur.

L'invention concerne, dans un premier but, un dispositif utilisable pour l'authentification servant à générer, de façon semi-automatique, des informations utilisables pour authentifier un document ou une personne.

Ce but est atteint par le fait que le dispositif utilisable pour l'authentification de document ou un porteur d'objet portable ou la prise d'informations nécessaires à l'authentification, comprend au moins un moyen de lecture d'un élément d'authentification d'un utilisateur habilité par une organisation à ouvrir et fermer une session d'émission de certificat et mémorisation des données lues ;
- un moyen de lecture optomagnétique de pistes optiques ou magnétiques de documents permettant de confirmer l'identité et l'adresse d'un client, ou d'indiquer les informations bancaires de ce client et un moyen de mémorisation de ces informations ;
- un moyen de génération d'un message contenant plusieurs champs extraits des informations mémorisées et d'émission de ce message vers une autorité de certification ;
- un moyen de réception du certificat calculé par l'autorité de certification et retourné par celle-ci vers le dispositif d'authentification ; et
- soit un moyen de communication avec un objet portable et un moyen de mémorisation dans l'objet portable du certificat ;
- soit un moyen de communication avec un dispositif d'impression et un moyen de commande de la reproduction sur un papier des informations sous forme codée correspondant d'une part aux champs ayant servi au calcul du certificat et d'autre part au certificat reçu.

Selon une autre particularité, le dispositif est utilisable pour l'authentification ou la prise d'informations nécessaires à l'authentification et comporte :
- un moyen de lecture optique d'un code (par exemple, du type code à barres, DataMatrix code matriciel) ;
- un moyen de communication ou de mémorisation pour obtenir la clé publique de l'organisme ayant généré le certificat codé ;
- un moyen de décryptage pour obtenir par utilisation de la clé publique dans un algorithme de déchiffrement appliqué au certificat codé, un résultat suite à l'exécution de l'algorithme, qui correspond à l'empreinte première des informations;
- un moyen de calcul d'une deuxième empreinte à partir des informations en clair inscrites selon le code sur le document et éventuellement scannées par le dispositif d'authentification et des moyens de comparaison de la première empreinte calculée par l'algorithme de déchiffrement et la deuxième empreinte calculée à l'aide des informations scannées ;
- des moyens d'attester de l'authenticité du document, par exemple, par affichage d'un message dans le cas d'une comparaison positive des deux empreintes.

Selon une autre particularité, le moyen de lecture optomagnétique est un lecteur de code à barres.

Selon une autre particularité, le moyen de lecture est un lecteur de bandes magnétiques.

Selon une autre particularité, le moyen de lecture optomagnétique est un lecteur de cartes à puce.

Selon une autre particularité, le moyen de lecture optomagnétique est un scanner optique.

Selon une autre particularité, le moyen de lecture optomagnétique est un lecteur RFID.

Selon une autre particularité, le moyen de lecture optomagnétique est une tablette à champ magnétique permettant d'enregistrer sous forme électronique une signature manuscrite.

Un autre but de l'invention est de proposer plusieurs procédés d'utilisation du dispositif utilisable pour l'authentification.

Selon ce but le procédé d'utilisation du dispositif utilisable pour l'authentification comporte au moins les étapes suivantes :
- ouverture par un utilisateur d'une session de saisie sur le dispositif ;
- réalisation d'une ou plusieurs saisies d'informations concernant un interlocuteur de l'utilisation par au moins un des différents moyens de lecture optomagnétique, cette saisie comportant au moins la saisie de documents d'identité (par exemple passeport, CNI), la saisie d'un document permettant de communiquer les informations bancaires, (voire carte bancaire, chèque, etc.) ;
- saisie d'un document permettant d'établir l'adresse du client (par exemple, la facture EDF, GDF, la facture d'un opérateur téléphonique, courrier de l'administration fiscale,...) ;
- fermeture de la session de saisie par l'utilisateur des dispositifs d'authentification, émission par le dispositif d'authentification vers une autorité de certification d'un message contenant plusieurs champs avec au moins les informations ci-dessus concernant l'interlocuteur et un identifiant de l'organisme auquel appartient l'utilisateur ;
- réception par le dispositif d'authentification d'un certificat calculé par l'autorité de certification et transmis au dispositif d'authentification, et, en outre, une étape d'écriture du certificat dans une carte SIM d'un client connecté au dispositif d'authentification, ou une étape d'impression sous forme de code à barres ou de code matriciel du certificat sur un document et sous forme de code à barres ou code matriciel des informations d'identité, d'adresse utilisée dans le certificat calculé.

Selon une autre particularité, le procédé comporte également une étape d'association du certificat calculé avec les informations constitutives d'un document mémorisé sous forme de fichier PDF ou Word ou sous toute autre forme de présentation et un des champs ayant servi au calcul du certificat comprend au moins une empreinte du fichier PDF ou Word ou sous toute autre forme de présentation.

Selon une autre particularité le document est un contrat de prestation de service de l'organisme ayant généré le certificat codé.

Selon une autre particularité, le procédé comporte une étape de signature manuscrite sur une tablette de numérisation d'écriture manuscrite et d'incorporation des informations numériques représentatives de la signature manuscrite ainsi que des informations représentatives de l'identité, de l'adresse et des coordonnées bancaires du client dans le contrat, puis la génération, à partir de ces informations, de l'empreinte du contrat complété et à partir de cette empreinte, d'une signature par la clé privée de l'interlocuteur (client) et mémorisation de l'ensemble des éléments sur le système informatique de l'organisme.

L'autre but de l'invention est de permettre la création par le dispositif connecté à une imprimante d'un document authentique utilisable par tous les organismes ayant à facturer des clients. Ce document est imprimé par le dispositif, après avoir reçu du centre de l'autorité de certification, le certificat calculé et incorpore lors de son impression, les informations suivantes : identité du client, adresse, organisme ayant généré le document (par exemple, banque, EDF, GDF, opérateur téléphonique) et certificat, l'ensemble de ces éléments étant reproduit également dans une zone particulière du document sous forme de code à barres ou de code matriciel, le certificat ayant été calculé à l'aide de la clé privée de l'organisme ayant émis le document.

D'autres particularités et avantages de la présente invention apparaîtront plus clairement à la lecture de la description ci-après, faite en référence aux dessins annexés, représentant un mode de réalisation non limitatif de la présente invention, dans lesquels :
- la figure 1a représente une vue extérieure d'un dispositif utilisable pour l'authentification selon l'invention ;
- la figure 1b représente schématiquement les différents circuits électroniques disposés à l'intérieur du dispositif ;
- la figure 2 représente les différents éléments d'un système permettant la mise en oeuvre de procédés d'utilisation du dispositif ;
- la figure 3a représente un premier procédé d'utilisation du dispositif dans un système permettant la remise des certificats;
- la figure 3b représente une seconde variante de la mise en oeuvre du procédé de génération de certificat ;
- la figure 4 représente une autre mise en oeuvre d'un procédé d'utilisation du dispositif d'authentification pour signer un document ;
- la figure 5 représente une autre variante d'utilisation du dispositif d'authentification sans impression du certificat avant l'émission du document final ;
- la figure 6 représente une dernière variante d'utilisation du dispositif d'authentification dans un procédé.

Avant d'entamer la description, il est nécessaire de rappeler certaines définitions qui serviront par la suite.

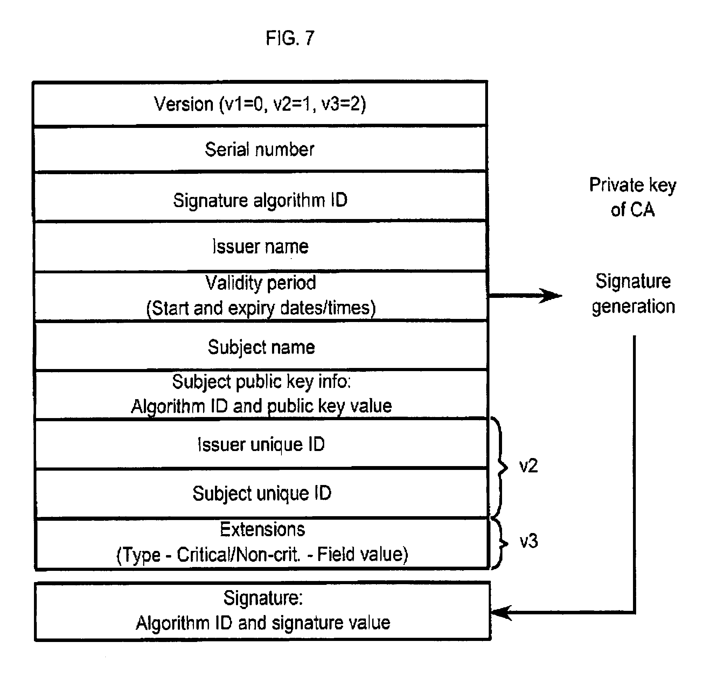

Un certificat est délivré par une autorité de certification. Le format d'un certificat fait l'objet d'une normalisation par l'ISO et concerne les certificats X.509. Si concrètement, un document électronique attestant qu'une clé publique est bien lié à une organisation, une personne physique, etc. la composition d'un certificat X509 est la suivante (voir figure 7) : ce document électronique comprend, tout d'abord, des informations concernant la version du certificat, le numéro de série du certificat, l'algorithme utilisé pour signer le certificat, le nom de l'organisme, la période de validité, le nom de l'interlocuteur, les informations de clé périphérique de l'interlocuteur: Version (v1=0, v2=1, v3=2, Serial number, Signature algorithm ID, Issuer name, Validity period (Start and expiry dates/times), Subject name, Subject public key info : Algorithm ID and public key value, Issuer unique ID, Subject unique ID, Extensions (Type - Critical/Non-crit. - Field value), Signature : Algorithm ID and signature value.

Ainsi, un certificat numérique porte les caractéristiques de son titulaire : si le porteur est un être humain, cela peut être son nom, son prénom, le nom de sa structure et de son entité d'appartenance. Si c'est un équipement informatique le nom est remplacé par l'URI du service. A ces informations d'identification s'ajoute la partie publique du bi-clé, la clé publique, l'identité de l'entité en charge de la signature du certificat et la signature proprement dite dudit certificat. Les authentifications ont pour but d'attester l'authenticité des données. Elles peuvent se faire, soit par des clés symétriques, soit par des clés asymétriques. Par les clés asymétriques, le mode d'authentification se base sur l'utilisation de deux clés distinctes, une clé privée et une clé publique. Pour authentifier un document ou un objet, l'objet ou le document doit être associé à une signature qui doit convaincre le destinataire que le document ou l'objet a bien été réalisé par celui qui l'a signé avec sa clé privée et de ce fait est authentique.

La signature d'un document électronique est produite en général par la mise en oeuvre d'une fonction de hachage appliquée aux informations du document pour générer une information réduite qui s'appelle l'empreinte du document. Cette empreinte est ensuite introduite dans un algorithme de signature qui, par utilisation de l'empreinte et de la clé privée de l'organisme ou de l'interlocuteur, va générer une signature, le message associé à la signature est alors envoyé.

La vérification se fait en décryptant la signature à l'aide de la clé publique, respectivement de l'organisme ou de l'interlocuteur, pour obtenir l'empreinte de signature et en appliquant au message reçu la fonction de hachage pour obtenir l'empreinte du message reçu.

L'empreinte de signature reçue et l'empreinte de message reçue sont ensuite comparées et si elles sont identiques, l'authenticité du document est attestée. Il en est de même pour des informations contenues dans un objet portable, dans la mesure où ces informations sont également signées et où l'objet met en oeuvre ensuite le mécanisme ci-dessus pour authentifier ces informations.

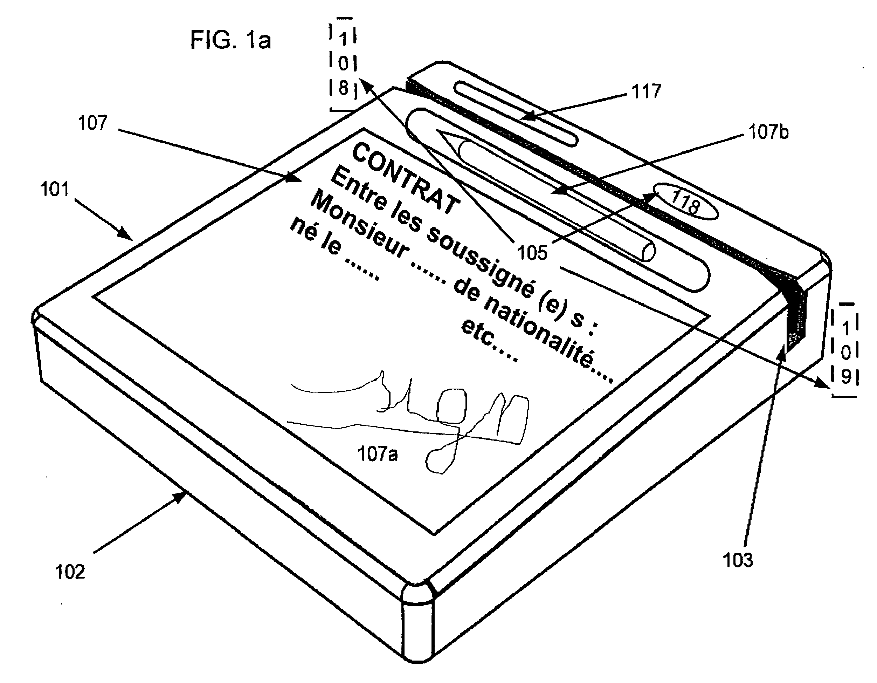

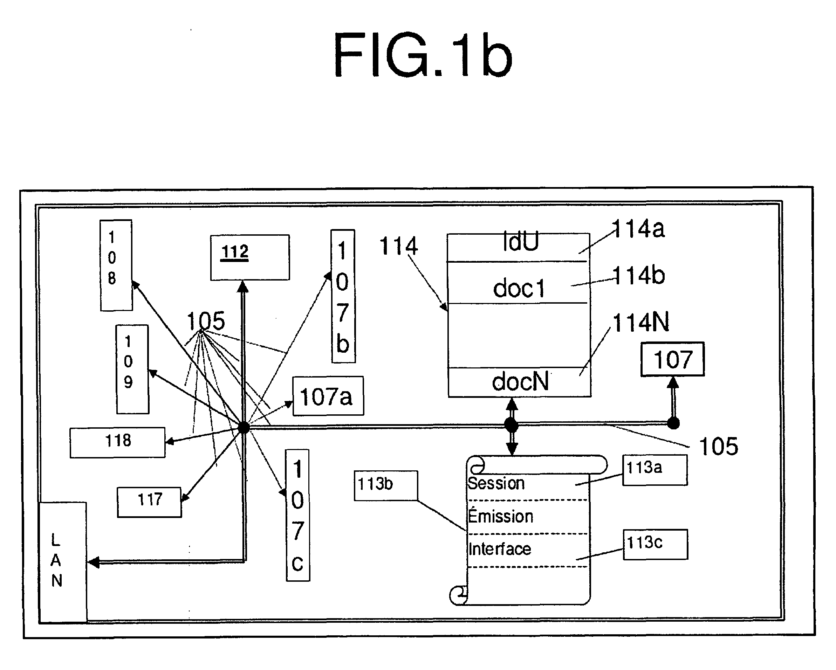

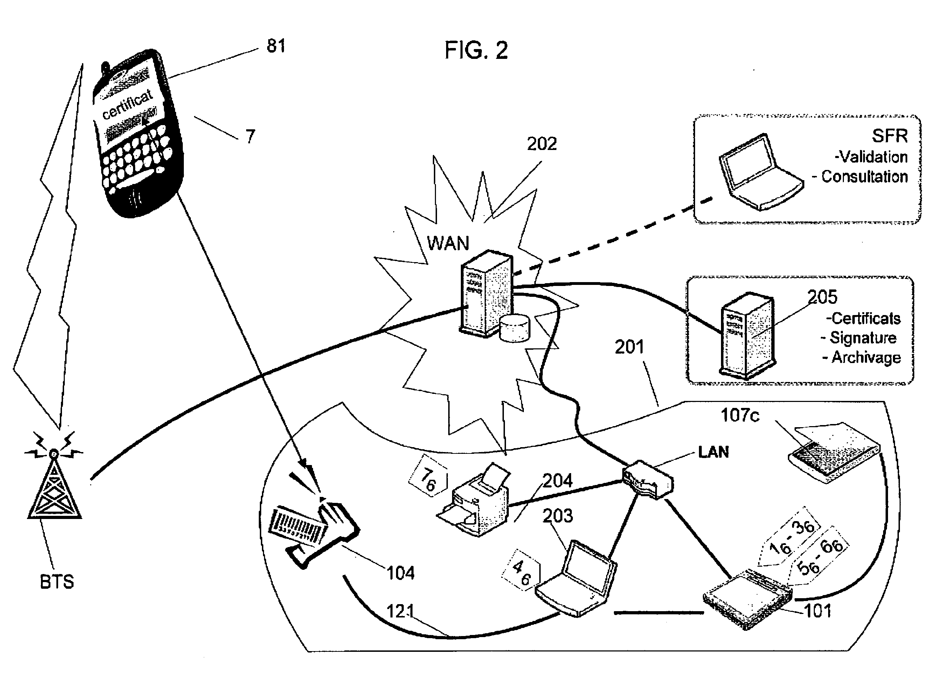

Les figures 1a, 1b et 2 représentent un dispositif (5) utilisable pour l'authentification, notamment dans les procédés décrits ci-après.

Le dispositif (101) comporte un dispositif (104) lecteur de code à barres dont le lecteur est relié au bus (105) du dispositif. Classiquement le dispositif (104) lecteur de codes à barres est un pistolet qui permet de lire des codes à barres qui sont balayés par un faisceau lumineux lorsque la gâchette du lecteur est activée. Ces codes à barres sont soit ceux d'un document à authentifier, soit ceux d'un badge d'un employé de l'organisme souhaitant ouvrir une session d'authentification sur le dispositif (101). Le lecteur (104) est connecté au dispositif (101) de manière câblée par une liaison (121) ou au travers l'air (OTA, Over The Air). Les connexions OTA les plus adaptées ici sont du type Bluetooth ou Wifi. Le dispositif (101) comporte un carter (102), représenté sur la figure 1a, dans lequel est aménagée une fente (103), laquelle permet de faire glisser des documents que l'on souhaite faire lire par un des lecteurs optomagnétiques (108, 109) du dispositif (101). Il est à noter que la disposition de la fente (103) sur le dispositif (101) peut être réalisée de différentes manières sur la face supérieure ou sur les faces latérales du dispositif. Parallèlement à une des faces de la fente (103) est disposé un ensemble de capteurs dont l'un (109) est un capteur optique permettant la lecture optique d'une piste optique sur un document telle qu'une carte d'identité, un passeport, un chéquier ou une carte bancaire.

Un autre capteur, tel qu'un capteur magnétique (108) est également disposé dans la fente pour permettre la lecture d'une bande magnétique telle que celle qui existe sur les cartes de paiement, les tickets de transport en commun ou d'autres documents. Un document glissé dans la fente (103) est déplacé latéralement le long de cette fente pour permettre la lecture des informations sur la piste magnétique ou sur la piste optique.

La figure 1 montre également que le dispositif (101) peut comporter un lecteur (117) de carte microcircuit. Le lecteur (117) est également connecté au bus (105). Le dispositif (101) peut également comporter un lecteur RFID (118), lequel est connecté au bus (105). Dans le boîtier du dispositif (101) est disposé un ensemble électronique (100) comprenant un microprocesseur (112), une mémoire (113) de programmes reliés entre eux par le bus (105), lequel bus (105) est également relié à une interface de connexion (115), à un réseau de télécommunication, par exemple, à un réseau local (LAN).

Chacune des actions de lecture par un des capteurs (108, 109, 118, 117), d'envoi de message vers un serveur, de réception de message et de commande d'impression ou d'écriture dans un objet portable d'informations est réalisé sous le contrôle du microprocesseur (112) exécutant les codes d'instructions enregistrés dans la mémoire de programme (113) du dispositif (101). Cette mémoire de programme (113) est divisée en plusieurs zones, chaque zone correspondant à une fonctionnalité du dispositif et comporte :
- au moins une zone (113a) de mémorisation des codes d'instructions pour la gestion des sessions de lecture en produisant, par exemple, sur l'écran d'affichage (107a) du dispositif (101), des messages incitant l'utilisateur à réaliser des opérations de lecture par un des capteurs de chacun des différents dispositifs de lecture ;
- une zone (113b) mémorisant des codes d'instructions pour la gestion de l'émission et la réception des messages ; et
- une zone (113c) mémorisant des codes d'instructions pour interfacer chacun des autres éléments du dispositif avec le microprocesseur.

Le dispositif comporte également un écran (107), lequel est combiné avec une tablette (107a) à champ magnétique pour former un écran tactile qui permet à un stylet (107b) d'écrire manuellement des informations et d'enregistrer des signaux électroniques numériques correspondant à ces informations écrites et incorporant des données représentatives de la vitesse et de la pression d'écriture. Cet écran 107 permet d'afficher des informations ou des actions à réaliser par l'interlocuteur et une représentation de la signature manuscrite (sign) enregistrée à l'aide de la tablette (107a) et du stylet (107b). Enfin le dispositif (101) peut comporter au moins un port USB et être également associé à un scanner (107c) qui peut, par balayage d'une surface, numériser un document.

Le bus (105) du dispositif (101) est également relié à une mémoire de travail (114) pour la production ou le traitement de messages. Au cours d'une session de lecture, la mémoire (114) est divisée en champs et comporte au moins un champ (114) incluant un identifiant de session, qui dans une variante préférée est un identifiant de l'employé représentant l'organisation ayant ouvert la session. La mémoire (114) comporte aussi plusieurs autres champs (114₁ à 114n), chacun comportant des informations résultant de la lecture d'un ou plusieurs documents par les différents capteurs des dispositifs. Le microprocesseur (112) gère également l'écran (107) et la tablette d'écriture (107a, 107b).

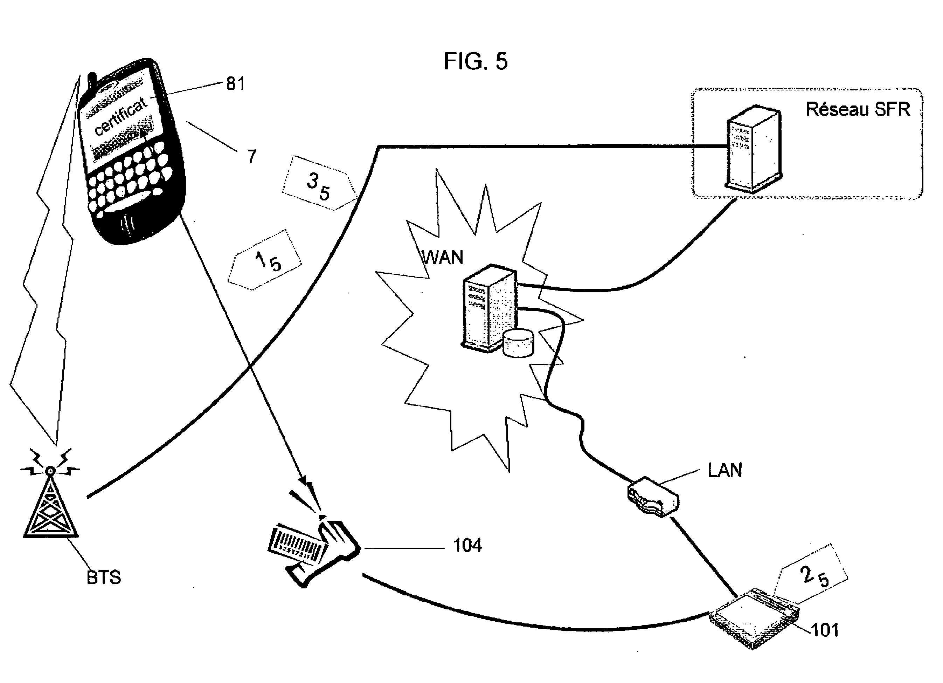

La figure 2 représente l'utilisation du dispositif dans un système. Cette figure 2 montre que le dispositif (101) est connecté à un réseau local (201), ledit réseau (201) étant lui-même connecté à un réseau global (202) de type Internent (WAN). Le réseau local (201) comporte au moins une imprimante (204) et éventuellement un terminal serveur (203) de l'organisme utilisant le dispositif. Le réseau local est connecté via le réseau global (202) à un serveur (205) d'une autorité de certification. Le serveur de certification (205) peut être relié à une station de base BTS ou Node B d'un réseau de radiotéléphonie (étape 3a, figure 5) pour envoyer le certificat (81) calculé par le serveur de certification (205) sous forme de MMS à la carte SIM du mobile (7).

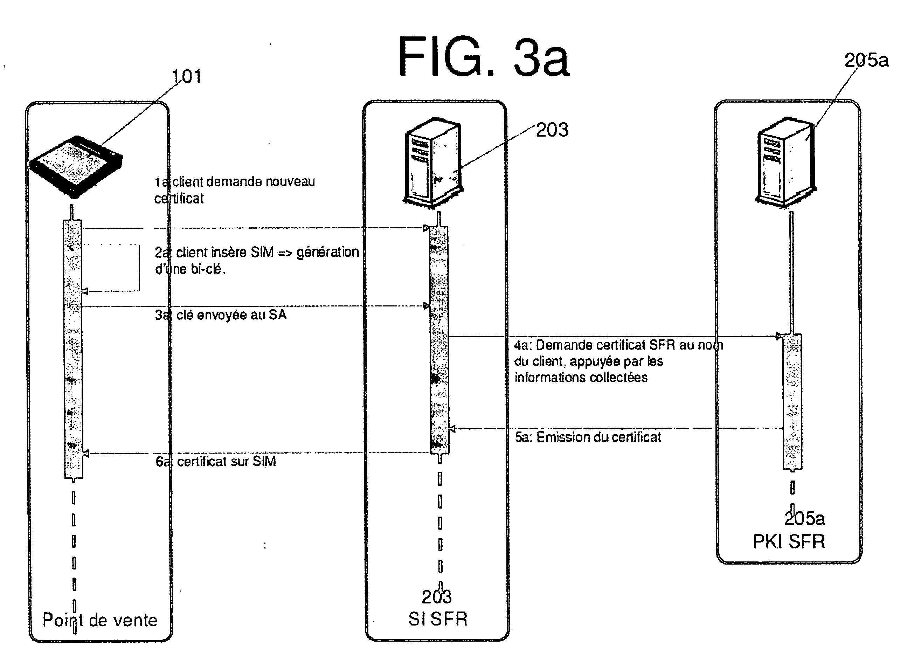

La figure 3a montre une première variante d'un procédé d'utilisation du dispositif dans lequel est réalisée l'ouverture d'une session de lecture. A l'ouverture l'utilisateur qui est un employé d'un organisme utilise un badge pour ouvrir une session de lecture sur le dispositif (101). Il existe au moins trois solutions pour cette ouverture de session. Une première solution est que le badge comporte un code à barres qui est lu en utilisant le pistolet (104). Une deuxième solution est que le badge comporte un marqueur RFID qui est lu par le lecteur (118). Une troisième solution est que le badge possède une puce avec ou sans contact hébergeant une clé et un certificat ; l'ouverture de session implique alors une authentification forte de l'employé, et le certificat de l'employé est alors utilisé par la suite pour signer électroniquement la demande de certificat du client. Dans les autres cas, chaque dispositif possède un certificat qui l'identifie de manière unique pour signer les demandes de certificats. Dans tous les cas, cette ouverture de session est détectée par le dispositif (101) qui initialise alors la mémoire (114), par les actions suivantes : effacement de l'éventuel contenu de la mémoire (114), mise à jour de la valeur (IdU) contenue dans le champ (114a) en fonction du code à barres lu ou du marqueur RFID lu ou du certificat lu. Dans la pratique le succès de cette étape est visualisé sur le dispositif (101) par un affichage spécifique sur l'écran (107) ou par des indications à LED dont la couleur indique le statut du dispositif, rouge : hors session, vert : en session, vert clignotant : transmission de données.

Une fois l'étape d'ouverture de session passée, le dispositif (101) effectue une étape de lecture (2₅ figure 5). Cette étape est considérée comme une étape de lecture semi-automatique dans la mesure où elle dispense d'avoir à saisir manuellement le contenu d'un document. Dans l'étape suivante, l'employé de l'organisation (SFR, EDF, etc.) ou l'interlocuteur (client) soumet un ou plusieurs documents au lecteur du dispositif (101). Chaque lecteur délivre des informations (doc 1, doc N) qui provoquent la mise à jour de la mémoire (114) en fonction des informations lues par les capteurs optomagnétiques (108, 109, 117, 118). Les documents destinés à être lus sont :
- les documents comportant une piste MRZ (Machine Readable Zone) : les documents officiels d'identité tels que les passeports ou les cartes d'identité nationale (CNI) ;
- les documents comportant une ou plusieurs zones écrites en utilisant la police de caractère CMC7 tels que, par exemple, les chèques bancaires
- les documents comportant un code à barres, de tels documents étant par exemple une facture dont le code à barres permet d'identifier la facture dans un système d'information ;
- les documents comportant un code matriciel, de tels documents étant par exemple une facture dont le code matriciel permet d'identifier la facture dans un système d'information ;
- les documents comportant une piste magnétique, comme par exemple, une carte de paiement, une carte d'abonné à un service, etc. ;
- les documents comportant un microcircuit tels que des cartes à puce, à contact ou sans contact, ou des badges RFID.

Ainsi, par exemple, la lecture d'un champ MRZ par le capteur optique va permettre d'obtenir un nom et un prénom. Un code à barres ou matriciel d'une facture va permettre, via une requête au système d'information ad hoc ayant généré le code à barres ou le code matriciel, d'obtenir une adresse. La lecture d'une piste magnétique va permettre d'obtenir un identifiant des moyens de paiement, etc.. Les différentes informations enregistrées dans des champs prédéterminés n'étant pas forcement uniquement limitées aux exemples décrits ci-dessus, et pouvant s'étendre à d'autres informations telles que le montant d'une facture d'un fournisseur d'énergie ou de prestations de service, telles que celles d'un opérateur, un code client, ou un certificat. Une fois la lecture effectuée de tous les éléments d'informations nécessaires pour le processus mis en oeuvre par le dispositif, l'employé de l'organisme, soit utilise son badge pour clore la session de lecture et déclencher l'émission d'un message demandant la création d'un certificat (étape 1a), soit active, à l'aide de l'écran (107), ou d'un clavier, un code déclenchant, par le dispositif (101, étape 4a), l'émission d'un message vers un serveur (205) d'une autorité de certification pour obtenir de cette autorité l'émission d'un certificat (81). Le certificat sera obtenu en combinant différents champs du message provenant des informations collectées et en signant cette combinaison à l'aide de la clé privée représentative de l'autorité de certification ou à l'aide de la demande de certificat de clé publique du client générée à l'étape 2a après l'insertion de la carte SIM dans la fente (117) du dispositif (101) et envoi (étape 3a) de cette demande au service SA (Serveur d'Application).

Dans le cas où l'autorité de certification est un prestataire de service, par exemple, E.D.F., la clé privée est celle du prestataire de service, par exemple, E.D.F. Dans le cas où il s'agit d'un opérateur téléphonique, c'est la clé privée de l'opérateur téléphonique qui sera utilisée. Chaque organisme constituant une autorité de certification (205) dispose d'une bi-clé comprenant une clé privée et une clé publique. Le certificat inclut, comme précisé dans la figure 7, la valeur de la signature, l'identifiant de l'algorithme et l'identifiant de la clé publique correspondant à la clé privée ayant permis la génération de la signature. Le certificat signé est envoyé (étape 5a), comme représenté à la figure 3A, par l'autorité de certification (205) vers le serveur interne (203) du réseau local, lequel va émettre (étape 6a) un message en direction du dispositif (101) provoquant l'affichage sur l'écran du dispositif (101) d'un message demandant l'insertion de la carte SIM, si celle-ci n'a pas été insérée et déclenchant l'écriture dans la carte SIM du certificat transmis (étape 6a de la figure 3a). Dans ce procédé, le dispositif (101) reçoit, à l'étape 2a, la carte SIM du client dans la fente du lecteur de carte (117) prévue à cet effet. L'insertion de la carte SIM dans le dispositif déclenche l'émission d'un message vers la carte SIM lui demandant la génération d'une bi-clé. A l'issue de la génération de la bi-clé, la carte SIM transmet la demande de signature de certificat ainsi générée au dispositif (101), lequel envoie un message au serveur interne (203) qui relaie ce message vers l'autorité de certification (205) en demandant un certificat au nom du client en utilisant les informations collectées sur le terminal et envoyées avec la clé publique du client.

Dans la variante dans laquelle la clé publique est envoyée au service interne, le SA (serveur d'application) joue un rôle d'intermédiaire actif entre le terminal qui demande le certificat et le système produisant le certificat. C'est au SA qu'est faite la demande de certificat qui effectue des contrôles avant de transmettre la demande au système émettant les certificats.

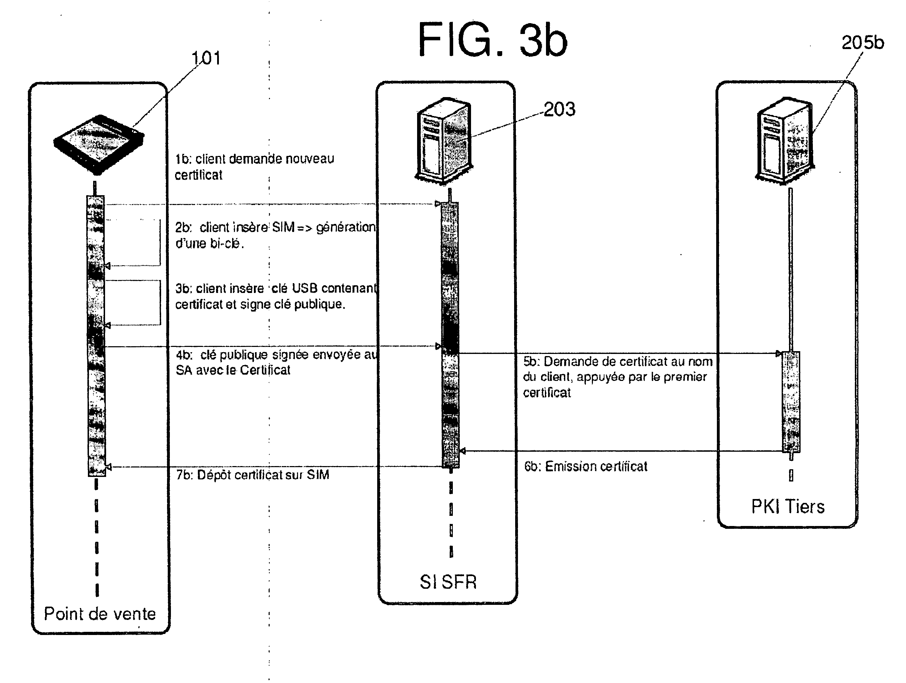

Dans un autre procédé représenté schématiquement à la figure 3b, après l'étape 1b de recueil des informations par les capteurs (108, 109, 118, 104) du dispositif (101) de demande d'un certificat. Le client, à l'étape 2b, insère sa carte SIM dans le lecteur pour déclencher par des moyens la génération d'une bi-clé, le procédé comporte une troisième étape 3b dans laquelle le client insère dans le port USB (non représenté) du dispositif (101) une clé USB contenant un certificat émis par une autorité tierce à l'organisme de l'utilisateur qui a recueilli les données concernant le client. Ce certificat indique la clé publique de l'autorité tierce. Le dispositif (101) envoie une commande à la carte SIM pour lui demander de chiffrer la demande de certificat à l'aide de la clé publique de l'autorité de certification tierce, puis transmet (étape 4b) la demande de certificat chiffrée au serveur interne (203), lequel demande à l'autorité tierce de certification d'un tiers (205b) de déchiffrer la demande de certificat, de signer la demande de certificat et d'émettre un certificat tiers au nom du client en utilisant éventuellement les informations collectées sur le terminal à l'étape 1b et saisies automatiquement par l'employé sur le dispositif (101). A l'étape 6b, l'autorité de certification (205b) émet le certificat vers le serveur (203) lequel transmet (étape 7b) celui-ci au dispositif 101 pour qu'il exécute l'écriture du certificat dans la carte SIM.

Dans une autre variante, la carte SIM est déjà dotée d'une bi-clé, bi-clé calculée ou initialisée à l'émission de la carte par l'émetteur de la carte ou l'encarteur lui-même. Dans une sous-variante, cette bi-clé est déjà signée par une autorité de signature technique, par exemple l'encarteur, dans cette sous-variante, l'identité renseignée dans ce certificat dit technique permet d'identifier le support physique : la carte SIM, de façon préférentielle l'identifiant renseigné dans ledit certificat technique peut être, de façon non limitative, la trame TAR ou de l'ICCID de la carte. Les processus décrits dans le cadre de la présente invention fonctionnent toujours avec ces sous variantes précédentes, le système fournissant le certificat technique en lieu et place de la clé publique et un nouveau certificat est installé dans la carte SIM à la fin de la réalisation du processus de génération du certificat électronique embarquant les données identifiantes du client. Dans une sous-variante, le nouveau certificat généré selon l'invention est en fait réalisé au travers d'un chaînage de certificats : le certificat technique et le certificat de l'autorité tierce de certification.

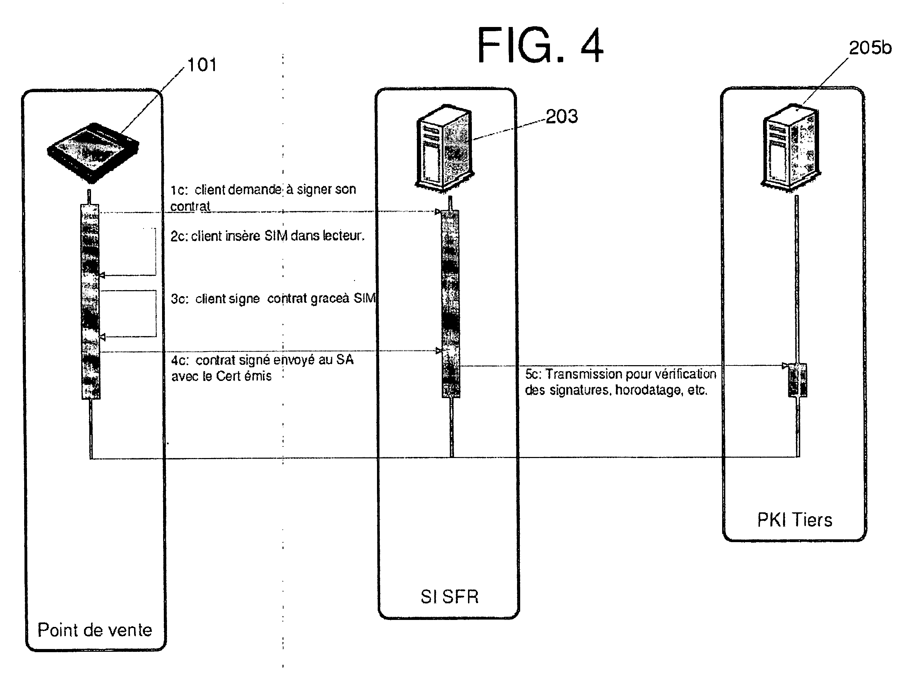

La figure 4 représente un autre procédé d'utilisation du dispositif (101) après l'exécution d'un procédé selon les figures 3a ou 3b ayant permis la mise en place dans la carte SIM d'un certificat. Le procédé de la figure 4 permet ainsi à l'utilisateur d'une carte SIM et d'un dispositif (101) de demander à signer un document électronique (étape 1c) tel que par exemple un contrat. Ce contrat peut avoir été produit sous forme électronique par un terminal (203) relié au réseau LAN ou bien avoir été scanné par un scanner (107c) pour produire un document électronique numérique. Une fois le contrat numérisé, le client (étape 2c) introduit sa carte SIM dans le lecteur et l'introduction de la carte déclenche dans le dispositif (101) l'exécution d'une fonction de hachage sur les informations numériques représentatives du contrat pour produire une empreinte du contrat. Ensuite, une signature est calculée à l'aide de la clé privée du client en utilisant l'empreinte du contrat. Cette signature est concaténée aux données représentatives du contrat. Le contrat ainsi signé est envoyé (étape 4c) au serveur d'authentification avec le certificat émis par l'autorité de certification de l'organisation tierce vers le serveur interne (203) de l'opérateur (EDF, SFR,..), lequel transmet à l'autorité de certification (étape 5c) le message pour vérification des signatures, de l'horodatage,... Le certificat incluant les clés de l'autorité ainsi que l'identité de l'utilisateur pour pouvoir retrouver la clé publique de cet utilisateur, va permettre de générer à partir de la signature et de la clé publique de l'utilisateur, l'empreinte du contrat. La comparaison des empreintes issues du décryptage de la signature avec l'empreinte calculée sur la base des données représentatives du contrat et envoyées, permettra à l'autorité ou au dispositif d'authentifier le document.

La figure 5 représente un autre procédé d'utilisation du dispositif dans lequel, à l'étape 0₅ le vendeur ou l'employé demande au client son numéro de mobile puis à l'étape 1₅, le serveur (203) produit un code liant l'identification du client, le point de vente, la date et l'heure courante pour demander à l'autorité de certification (205) un certificat. A l'étape 2₅, le certificat est envoyé de l'autorité de certification (205) vers le mobile (7) sous forme de MMS en code à barres ou code matriciel ou alternativement sous forme de SMS. A l'aide du lecteur (104), le vendeur scanne le code à barres (81) sur l'écran du mobile du client, alternativement, il saisit sur le clavier du dispositif (101) le code, envoyé par SMS. Le dispositif (101) comporte un écran tactile (107a), lequel permet d'afficher un clavier virtuel permettant la saisie clavier d'informations. Les informations ainsi obtenues peuvent permettre au serveur (203) de générer un nouveau contrat, par exemple pour l'accès à de nouveau services avec les informations de l'identification authentifiée générée par un tiers de confiance en l'occurrence les services de certification de l'opérateur (EDF, SFR, RATP,..).

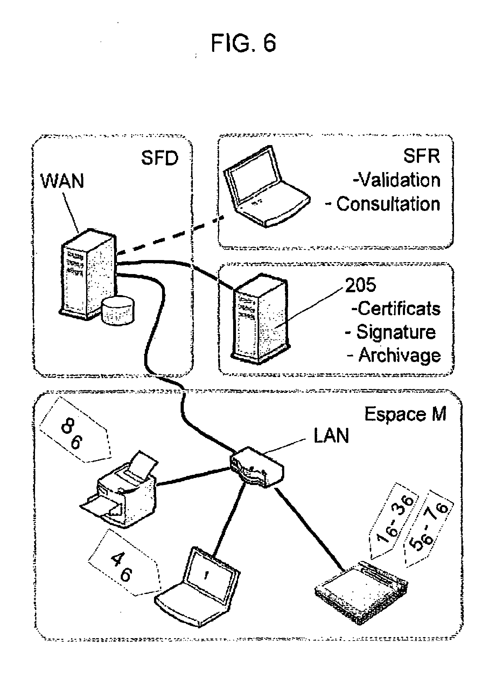

La figure 6 représente les différentes étapes d'un autre procédé permettant une autre utilisation du dispositif d'authentification (101). A la première étape 0₆ non représentée, l'employé demande au client les différentes pièces justificatives, carte d'identité nationale, passeport, carte visa, chèque, carte bancaire,... A la deuxième étape 1₆, l'employé ouvre une session sur le dispositif (101) en scannant avec le lecteur (104) (étape 1₅, figure 5) son badge et à la troisième étape 2₆ (figure 6), l'employé présente au dispositif (101) les différentes pièces justificatives dans un ordre quelconque. A la quatrième étape 3₆, l'employé termine sa session en scannant à nouveau son badge ce qui déclenche la transmission automatique des informations lues au serveur (205) de l'autorité de certification. Ce serveur (205) de l'autorité de certification génère un certificat et le renvoie vers le dispositif (101). A l'étape suivante 4₆. l'employé demande, par exemple par l'écran tactile (107a) du dispositif (101) ou par un autre terminal 203 en réseau avec ce dernier (101), l'impression d'un document facture ou contrat sur l'imprimante (204) étape 8₆. La facture ou le contrat doit inclure, sous forme lisible, l'identité du client, son adresse, l'identité de l'organisme émetteur du certificat et sous forme de code à barres ou code matriciel les mêmes informations et la signature générée par l'unité de certification à partir des informations ci-dessus. Le certificat envoyé (étape 5₆) par le serveur (205) de l'autorité de certification comporte une signature générée à partir de la clé privée de l'autorité de certification, l'identifiant de la clé publique de cette autorité, la signature ayant été calculée à partir des informations fournies dans le message reçu et incorporant l'identité du client, l'adresse de ce dernier et éventuellement d'autres informations. Le code à barres 2D, inscrit sur le document, pourra être lu par le lecteur (104) étape 6₆et, à partir de la signature électronique lue, le dispositif (101) calculera à l'aide de la clé publique de l'organisme de certification l'empreinte des informations, partir des informations inscrites en code-barres et lues par le lecteur (104), le dispositif (101) recalculera (étape 7₆) l'empreinte pour comparer ainsi les deux empreintes de façon à authentifier les informations. On comprend ainsi que grâce au dispositif de l'invention et son utilisation dans un système on peut mettre en place des processus d'authentification de documents ou de création de documents authentifiables de façon électronique quasiment automatisée et sure.

Dans une variante de mise en oeuvre de l'invention, l'usage du certificat au niveau de la carte SIM, ou l'usage des capacités de signature de la carte SIM sont protégés par un mécanisme d'authentification du porteur, mécanisme basé sur un usage d'un code secret (code secret différent du code PIN de la carte SIM), une lecture de donnée biométrique ou l'usage d'une information / d'algorithme de cryptographique détenue par le porteur de la carte. La phase de configuration ou de mise à disposition de cet élément d'authentification pouvant être réalisée en local sur le dispositif décrit par l'invention ou à distance via des technologies OTA (Over The Air : TS 03.48 ou les protocoles décrits par le consortium GlobalPlatform GP). Dans une autre sous-variante, le processus de délivrance des bi-clés, des capacités de signatures de la carte SIM (les logiciels à embarquer pour les calculs cryptographiques), des éléments d'authentification du porteur, la valeur du certificat sont fournis automatiquement à distance sous le pilotage de l'entité de certification via des moyens de téléchargement à distance de la carte SIM conformément aux principes décrits, dans la présente invention, de collecte et de prise d'informations nécessaires à l'authentification de l'utilisateur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif utilisable pour la lecture semi-automatique et sécurisée de documents officiels par exemple CNI, passeport, chèques, CB comportant :
- au moins un moyen de lecture optomagnétique (108, 109) des pistes optiques ou magnétiques de documents permettant de confirmer l'identité et l'adresse d'un client, ou d'indiquer les informations bancaires de ce client et un moyen de mémorisation de ces informations,
- un moyen de génération d'un message contenant plusieurs champs extraits des informations mémorisées et d'émission de ce message vers une autorité de certification (205) ;
- un moyen de réception du certificat calculé sur la base dudit message par l'autorité de certification (205) et retourné par celle-ci vers le dispositif d'authentification ; et
- soit un moyen de communication avec un objet portable et un moyen de mémorisation dans l'objet portable du certificat ;
- soit un moyen de communication avec un dispositif d'impression et un moyen de commande de la reproduction sur un papier des informations sous forme codée correspondant d'une part, aux champs ayant servi au calcul du certificat et d'autre part, du certificat reçu
**caractérisé en ce qu'**il effectue la lecture via au moins un desdits moyens de lecture optomagnétique (108, 109), cette lecture permettant d'attester l'authenticité des documents présentés, en les associant à une signature générée en utilisant la clé privée de l'organisme émetteur des documents officiels ou la demande de certificat de clé publique de l'utilisateur, alors que le dispositif permet de délivrer, via des connexions sécurisées, des certificats numériques à partir des informations authentiques extraites des documents présentés.

2. Dispositif selon la revendication 1, **caractérisé en ce qu'**il est utilisable pour l'authentification ou la prise d'informations nécessaires à l'authentification et comporte :
- un moyen de lecture optique (109) d'un code par exemple code à barres, Datamatrix code matriciel;
- un moyen de communication ou de mémorisation pour obtenir la clé publique de l'organisme ayant généré le certificat codé ;
- un moyen de décryptage pour obtenir par utilisation de la clé publique dans un algorithme de déchiffrement appliqué au certificat codé, un résultat suite à l'exécution de l'algorithme, qui correspond à l'empreinte première des informations ;
- un moyen de calcul d'une deuxième empreinte à partir des informations en clair inscrites selon le code sur le document et éventuellement scannées par le dispositif d'authentification et des moyens de comparaison de la première empreinte calculée par l'algorithme de déchiffrement et la deuxième empreinte calculée à l'aide des informations scannées ;
- des moyens d'attester de l'authenticité du document, par exemple, par affichage d'un message dans le cas d'une comparaison positive des deux empreintes.

3. Dispositif selon les revendications précédentes, **caractérisé en ce que** le moyen de lecture optomagnétique (108, 109) est un lecteur de code à barres.

4. Dispositif selon les revendications précédentes, **caractérisé en ce que** le moyen de lecture est un lecteur de bandes magnétiques.

5. Dispositif selon les revendications précédentes, **caractérisé en ce que** le moyen de lecture optomagnétique est un lecteur de cartes à puce.

6. Dispositif selon les revendications précédentes, **caractérisé en ce que** le moyen de lecture optomagnétique est un scanner optique.

7. Dispositif selon les revendications précédentes, **caractérisé en ce que** le moyen de lecture optomagnétique est un lecteur RFID.

8. Dispositif selon les revendications précédentes, **caractérisé en ce que** le moyen de lecture optomagnétique est une tablette à champ magnétique permettant d'enregistrer sous forme électronique une signature manuscrite.

9. Procédé d'utilisation d'un dispositif utilisable pour la lecture semi-automatique et sécurisée de documents officiels par exemple CNI, passeport, chèques, CB **caractérisé en ce qu'**il comporte au moins les étapes suivantes :
- ouverture par un utilisateur d'une session de saisie sur le dispositif ;
- réalisation d'une ou plusieurs saisies d'informations concernant un interlocuteur de l'utilisation par au moins un des différents moyens de lecture optomagnétique (108, 109), cette saisie comportant au moins la saisie de documents d'identité par exemple passeport, CNI, la saisie d'un document permettant de communiquer les informations bancaires, voir carte bancaire, chèque, etc. et cette lecture permettant d'attester l'authenticité des documents présentés ;
- saisie d'un document permettant d'établir l'adresse du client par exemple la facture EDF, GDF, la facture opérateur téléphonique, courrier de l'administration fiscale;
- fermeture de la session de saisie par l'utilisateur des dispositifs d'authentification, émission par le dispositif d'authentification vers une autorité de certification (205) d'un message contenant et combinant plusieurs champs avec au moins les informations ci-dessus concernant l'interlocuteur et étant signé à l'aide de la clé privée de l'organisme auquel appartient l'utilisateur ou à l'aide de la demande de certificat de clé publique de l'utilisateur ;
- réception par le dispositif d'authentification d'un certificat calculé, en utilisant la clé privée de l'organisme émetteur des documents officiels ou la demande de certificat de clé publique du client, par l'autorité de certification (205) et transmis au dispositif d'authentification, le dispositif permettant ainsi de délivrer, via des connexions sécurisées des certificats numériques à partir des informations authentiques extraites des documents présentés.

10. Procédé selon la revendication 9, **caractérisé en ce qu'**il comporte, en outre, une étape d'écriture du certificat dans une carte SIM d'un client connecté au dispositif d'authentification.

11. Procédé selon la revendication 9, **caractérisé en ce qu'**il comporte, en outre, l'étape d'impression sous forme de code à barres ou de code matriciel du certificat sur un document et sous forme de code à barres ou code matriciel des informations d'identité, d'adresse utilisée dans le certificat calculé.

12. Procédé selon une des revendications 9 à 11, **caractérisé en ce qu'**il comporte également une étape d'association du certificat calculé avec les informations constitutives d'un document mémorisé sous forme de fichier PDF ou Word ou sous toute autre forme de présentation et un des champs ayant servi au calcul du certificat comprend au moins une empreinte du fichier PDF ou Word ou sous toute autre forme de présentation.

13. Procédé selon une des revendications 9 à 12, **caractérisé en ce que** le document est un contrat de prestation de service de l'organisme ayant généré le certificat codé.

14. Procédé selon la revendication 11 ou 13, **caractérisé en ce qu'**il comporte une étape de signature manuscrite sur une tablette de numérisation (107a) d'écriture manuscrite et d'incorporation des informations numériques représentatives de la signature manuscrite ainsi que des informations représentatives de l'identité, de l'adresse et des coordonnées bancaires du client dans le contrat, puis la génération, à partir de ces informations, de l'empreinte du contrat complété et à partir de cette empreinte, d'une signature par la clé privée de l'interlocuteur ou client et mémorisation de l'ensemble des éléments sur le système informatique de l'organisme.

15. Procédé selon la revendication 9, **caractérisé en ce qu'**il permet la création pour le dispositif connecté à une imprimante d'un document authentique utilisable par tous les organismes ayant à facturer des clients, ce document est imprimé par le dispositif, après avoir reçu du centre de l'autorité de certification (205), le certificat calculé et incorpore lors de son impression, les informations suivantes : identité du client, adresse, organisme ayant généré le document par exemple banque, EDF, GDF, opérateur téléphonique et certificat, l'ensemble de ces éléments étant reproduit également dans une zone particulière du document sous forme de code à barres ou de code matriciel, le certificat ayant été calculé à l'aide de la clé privée de l'organisme ayant émis le document.

## Claims

1. A device which may be used for semi-automatic and secured reading of official documents, for example, national identity card, passport, cheques, debit card, including:
- at least one optomagnetic means (108,109) for reading optical or magnetic tracks of documents allowing confirmation of the identity and the address of a customer, or indication of the bank information of this customer and means for storing this information in memory,
- a means for generating a message containing several fields extracted from the stored information and for transmitting this message to a certification authority (205);
- a means for receiving the certificate computed on the basis of said message by the certification authority (205) and returned by the latter to the authentication device; and
- either a means for communicating with a portable object and a means for storing in memory the certificate in the portable object;
- or a means for communicating with a printing device and a means for controlling the reproduction on paper of information in coded form corresponding to the fields having been used for computing the certificate on the one hand, and of the received certificate,
**characterized in that** it carries out the reading via at least one of said optomagnetic reading means (108, 109), this reading allowing attestation of the authenticity of the produced documents, by associating them with a signature generated by using the private key of the organization issuing the official documents or the request for the user's public key certificate, while the device allows delivery via secured connections of digital certificates from authentic information extracted from the produced documents.

2. The device according to claim 1, **characterized in that** it may be used for authenticating or taking information required for the authentication and includes:
- an optical means (109) for reading a code, a bar code, a Datamatrix matrix code;
- a communication or memory storage means for obtaining the public key of the organization having generated the encoded certificate;
- a decryption means for obtaining by use of the public key in a deciphering algorithm applied to the encoded certificate, a result following the execution of the algorithm, which corresponds to the first imprint of the information;
- a means for computing a second imprint from plain text information written according to the code on the document and possibly scanned by the authentication device and means for comparing the first imprint computed by the deciphering algorithm and the second imprint computed from the scanned information;
- means for attesting the authenticity of the document, for example by displaying a message in the case of positive comparison of both imprints.

3. The device according to the preceding claims, **characterized in that** the optomagnetic reading means (108, 109) is a bar code reader.

4. The device according to the preceding claims, **characterized in that** the reading means is a magnetic tape reader.

5. The device according to the preceding claims, **characterized in that** the optomagnetic reading means is a chip card reader.

6. The device according to the preceding claims, **characterized in that** the optomagnetic reading means is an optical scanner.

7. The device according to the preceding claims, **characterized in that** the optomagnetic reading means is an RFID reader.

8. The device according to the preceding claims, **characterized in that** the optomagnetic reading means is a magnetic field tablet with which a handwritten signature may be stored in electronic form.

9. A method for using a device which may be used for semi-automatic and secured reading of official documents, for example, national identity card, passport, cheques, debit card, **characterized in that** it includes at least the following steps:
- opening of an input session on the device by the user;
- performing one or several inputs of information relating to an interlocutor of the use by at least one of the different optomagnetic reading means (108, 109), this input including at least the input of identity documents, for example passport, national identity card, the input of a document with which bank information may be communicated, see banker's card, cheque, etc. and this reading allowing attestation of the authenticity of the produced documents:
- inputting a document with which the address of the customer may be established, for example an electricity, gas bill, telephone provider invoice, correspondence with tax authorities;
- closing of the input session by the user of the authentication devices, emission by the authentication device to a certification authority (205) of a message containing and combining several fields with at least the information above relating to the interlocutor and being signed with the private key of the organization to which belongs the user or with the user's request for a public key certificate;
- receiving a computed certificate by the authentication device, by using the private key of the organization issuing the official documents or the request for a public key certificate of the customer, by the certification authority (205) and transmitted to the authentication device, the device thereby allowing delivery via secured connections, of digital certificates from authentic information extracted from the produced documents.

10. The method according to claim 9, **characterized in that** it further includes a step for writing the certificate in an SIM card of a customer connected to the authentication device.

11. The method according to claim 9, **characterized in that** it further includes the step for printing as a bar code or a matrix code the certificate on a document and as a bar code or matrix code identity, address information used in the computed certificate.

12. The method according to any of claims 9 to 11, **characterized in that** it further includes a step for associating the computed certificate with constitutive information of a document stored in memory in the form of a PDF or Word file or in the form of any other presentation form and one of the fields having been used for computing the certificate comprises at least one imprint of the PDF or Word file or in any other presentation form.

13. The method according to any of claims 9 to 12, **characterized in that** the document is a service provided contract of the organization having generated the encoded certificate.

14. The method according to claim 11 or 13, **characterized in that** a step for a handwritten signature on a tablet (107a) for digitizing handwriting and for incorporating digital information representative of the handwritten signature as well as representative information of the identity, address and bank details of the customer in the contract, and then generating from this information, the imprint of the completed contract and from this imprint a signature by the private key of the interlocutor or customer and storing in memory all of the elements on the computer system of the organization.

15. The method according to claim 9, **characterized in that** for the device connected to a printer it allows creation of an authentic document which may be used by all the organizations having to bill customers, this document is printed by the device, after having received from the certification authority centre (205), the computed certificate and incorporates during its printing, the following information: identity of the customer, address, organization having generated the document, for example a bank, electricity provider, gas provider, telephone operator and certificate, the whole of these elements being also reproduced on a particular area of the document as a bar code or matrix code, the certificate having been computed by means of the private key of the organization having issued the document.

## Patentansprüche

1. Vorrichtung, die zum halbautomatischen und abgesicherten Lesen offizieller Dokumente, zum Beispiel Personalausweis, Pass, Schecks, Kreditkarte, verwendbar ist, umfassend:
- mindestens ein optomagnetisches Lesemittel (108, 109) der optischen oder Magnetstreifen von Dokumenten, die die Bestätigung der Identität und der Adresse eines Kunden erlauben, oder die Angabe der Bankinformationen dieses Kunden und ein Mittel zum Speichern dieser Informationen,
- ein Mittel zur Erzeugung einer Nachricht, die mehrere Felder enthält, die den gespeicherten Informationen entnommen wurden, und zum Versand dieser Nachricht an eine Zertifizierungsstelle (205),
- ein Mittel zum Empfang des von der Zertifizierungsstelle (205) auf der Basis der Nachricht berechneten und von dieser an die Authentifizierungsvorrichtung zurückgeschickten Zertifikats, und
- entweder ein Mittel zur Kommunikation mit einem tragbaren Gegenstand und ein Mittel zum Speichern des Zertifikats im tragbaren Gegenstand,
- oder ein Mittel zur Kommunikation mit einer Druckvorrichtung und ein Mittel zur Steuerung der Wiedergabe auf einem Papier der Informationen in codierter Form, die einerseits den Feldern entsprechen, die zur Berechnung des Zertifikats gedient hatten und andererseits dem erhaltenen Zertifikat,
**dadurch gekennzeichnet, dass** das Lesen anhand mindestens eines der optomagnetischen Lesemittel (108, 109) durchgeführt wird, wobei dieses Lesen erlaubt, die Authentizität der vorgelegten Dokumente zu bescheinigen, indem sie einer generierten Unterschrift zugeordnet werden bei Verwendung des privaten Schlüssels der die offiziellen Dokumente ausstellenden Organisation oder der öffentlichen Schlüsselzertifikatanfrage des Benutzers, wogegen die Vorrichtung erlaubt, über abgesicherte Verbindungen ausgehend von authentischen Informationen, die den vorgelegten Dokumenten entnommen wurden, digitale Zertifikate zu liefern.

2. Vorrichtung nach Anspruch 1, **dadurch gekennzeichnet, dass** sie zur Authentifizierung oder der Entgegennahme von zur Authentifizierung notwendigen Informationen verwendbar ist und umfasst:
- ein optisches Lesemittel (109) eines Codes, Strichcodes, Datamatrix-Matrixcodes,
- ein Kommunikations- oder Speichermittel, um den öffentlichen Schlüssel der Organisation zu erhalten, die das codierte Zertifikat generiert hat,
- ein Entschlüsselungsmittel, um durch Verwendung des öffentlichen Schlüssels in einem auf das codierte Zertifikat angewendeten Entschlüsselungsalgorithmus ein Ergebnis nach Ausführung des Algorithmus zu erhalten, das dem ersten Print der Informationen entspricht,
- ein Mittel zur Berechnung eines zweiten Prints aus den Klarinformationen, die gemäß dem Code auf dem Dokument eingetragen sind und eventuell von der Authentifizierungsvorrichtung gescannt werden und Mittel zum Vergleichen des ersten, vom Entschlüsselungsalgorithmus berechneten Prints und des zweiten, mit Hilfe der gescannten Informationen berechneten Prints,
- Mittel zur Bescheinigung der Authentizität des Dokuments, zum Beispiel durch Anzeige einer Nachricht im Fall eines positiven Vergleichs der zwei Prints.

3. Vorrichtung nach den vorangehenden Ansprüchen, **dadurch gekennzeichnet, dass** das optomagnetische Lesemittel (108,109) ein Strichcodeleser ist.

4. Vorrichtung nach den vorangehenden Ansprüchen, **dadurch gekennzeichnet, dass** das Lesemittel ein Magnetstreifenleser ist.

5. Vorrichtung nach den vorangehenden Ansprüchen, **dadurch gekennzeichnet, dass** das optomagnetische Lesemittel ein Chipkartenleser ist.

6. Vorrichtung nach den vorangehenden Ansprüchen, **dadurch gekennzeichnet, dass** das optomagnetische Lesemittel ein optischer Scanner ist.

7. Vorrichtung nach den vorangehenden Ansprüchen, **dadurch gekennzeichnet, dass** das optomagnetische Lesemittel ein RFID-Lesegerät ist.

8. Vorrichtung nach einem der vorangehenden Ansprüche, **dadurch gekennzeichnet, dass** das optomagnetische Lesemittel ein Magnetfeldtablet ist, das die Aufzeichnung einer handschriftlichen Unterschrift in elektronischer Form erlaubt.

9. Verfahren zur Anwendung einer Vorrichtung, die zum halbautomatischen und abgesicherten Lesen offizieller Dokumente, zum Beispiel Personalausweis, Pass, Schecks, Kreditkarte, verwendbar ist, **dadurch gekennzeichnet, dass** es mindestens die folgenden Schritte umfasst:
- Eröffnen einer Eingabesitzung auf der Vorrichtung durch den Benutzer,
- Durchführen einer oder mehrerer Informationseingaben, die einen Partner der Anwendung betreffen, durch mindestens eines der verschiedenen optomagnetischen Lesemittel (108, 109), wobei diese Eingabe mindestens die Eingabe von Identitätsdokumenten, zum Beispiel Pass, Personalausweis umfasst, wobei die Eingabe eines Dokuments erlaubt, Bankinformationen, ja sogar Kreditkarte, Scheck usw., zu kommunizieren, und wobei dieses Lesen erlaubt, die Authentizität der vorgelegten Dokumente zu bescheinigen,
- Eingabe eines Dokuments, das erlaubt, die Adresse des Kunden zu erstellen, zum Beispiel Rechnung der EDF, GDF, des Telefondienstanbieters, Schreiben der Steuerverwaltung,
- Beenden der Eingabesitzung durch den Benutzer der Authentifizierungsmittel, Senden einer Nachricht durch die Authentifizierungsvorrichtung an eine Zertifizierungsstelle (205), die mehrere Felder enthält und mit mindestens den obigen Informationen, die den Partner betreffen, kombiniert und mit Hilfe des privaten Schlüssels der Organisation unterzeichnet ist, zu der der Benutzer gehört, oder mit Hilfe der öffentlichen Schlüsselzertifikatanforderung des Benutzers,
- Empfang eines durch die Authentifizierungsvorrichtung durch Verwendung des privaten Schlüssels der die offiziellen Dokumente ausstellenden Organisation oder die öffentliche Schlüsselzertifikatanforderung des Kunden von der Zertifizierungsstelle berechneten und an die Authentifizierungsvorrichtung übertragenen Zertifikats, wobei die Vorrichtung damit erlaubt, über abgesicherte Verbindungen digitale Zertifikate, ausgehend von authentischen Informationen, die den vorgelegten Dokumenten entnommen wurden, bereitzustellen.

10. Verfahren nach Anspruch 9, **dadurch gekennzeichnet, dass** es weiterhin einen Schritt des Schreibens des Zertifikats auf eine SIM-Karte eines Kunden umfasst, die mit der Authentifizierungsvorrichtung verbunden ist.

11. Verfahren nach Anspruch 9, **dadurch gekennzeichnet, dass** es weiterhin den Schritt des Druckens in Strich- oder Matrixcodeform des Zertifikats auf ein Dokument und in Strich- oder Matrixcodeform der im berechneten Zertifikat verwendeten Identitäts-, Adressinformationen umfasst.

12. Verfahren nach einem der Ansprüche 9 bis 11, **dadurch gekennzeichnet, dass** es ebenfalls einen Schritt der Verbindung des berechneten Zertifikats mit den Informationen umfasst, die Bestandteil eines Dokuments sind, das in Form einer PDF- oder Word-Datei oder in jeder anderen Präsentationsform gespeichert wurde, und dass eines der Felder, die zur Berechnung des Zertifikats gedient hatten, mindestens einen Print der PDF- oder Word- Datei oder in jeder anderen Präsentationsform umfasst.

13. Verfahren nach einem der Ansprüche 9 bis 12, **dadurch gekennzeichnet, dass** das Dokument ein Dienstleistungsvertrag der Organisation ist, die das codierte Zertifikat generiert hat.

14. Verfahren nach Anspruch 11 oder 13, **dadurch gekennzeichnet, dass** es einen Schritt der handschriftlichen Unterzeichnung auf einem Tablett zur Handschriftdigitalisierung (107a) und Inkorporierung der repräsentativen digitalen Informationen der handschriftlichen Unterschrift sowie der repräsentativen Identitäts-, Adress- und Bankverbindungsinformationen des Kunden in den Vertrag umfasst, anschließend die Erzeugung, ausgehend von diesen Informationen, des Prints des komplettierten Vertrags und ausgehend von diesem Print, einer Unterschrift durch den privaten Schlüssel des Partners oder Kunden und Speicherung der gesamten Elemente im EDV-System der Organisation.

15. Verfahren nach Anspruch 9, **dadurch gekennzeichnet, dass** es für die mit einem Drucker verbundene Vorrichtung erlaubt, ein authentisches Dokument zu erzeugen, das von allen Organisationen verwendbar ist, die Kunden Rechnungen ausstellen, wobei dieses Dokument von der Vorrichtung ausgedruckt wird, nachdem es vom Zentrum der Zertifizierungsstelle (205) das berechnete Zertifikat erhalten hat und bei seinem Druck die folgenden Informationen inkorporiert: Identität des Kunden, Adresse, Organisation, die das Dokument erzeugt hat, zum Beispiel Bank, EDF, GDF, Telefonanbieter und Zertifikat, wobei die Gesamtheit dieser Elemente auch in einem besonderen Bereich des Dokuments in Strich- oder Matrixcodeform reproduziert sind, wobei das Zertifikat mit Hilfe des privaten Schlüssels der Organisation berechnet wurde, die das Dokument ausgestellt hat.
